# EUROPÄISCHE PATENTSCHRIFT

(11) **EP 4 360 160 B1**
(45) Veröffentlichungstag und Bekanntmachung des Hinweises auf die Patenterteilung: **02.07.2025**
(21) Anmeldenummer: 22731113.1
(22) Anmeldetag: 23.05.2022
(51) Int. Cl.: H01M 10/6556

(54) **ELEKTRISCHER ENERGIESPEICHER MIT EINEM VERTEILNETZ SOWIE KRAFTFAHRZEUG**
ELECTRICAL ENERGY STORE HAVING A DISTRIBUTION NETWORK, AND MOTOR VEHICLE
ACCUMULATEUR D'ÉNERGIE ÉLECTRIQUE DOTÉ D'UN RÉSEAU DE DISTRIBUTION ET VÉHICULE AUTOMOBILE

(30) Priorität: 22.06.2021 DE 102021116056
(43) Veröffentlichungstag der Anmeldung: 01.05.2024
(73) Patentinhaber: Bayerische Motoren Werke Aktiengesellschaft, 80809 München (DE)
(72) Erfinder: FRANKE, Torsten, 81477 München (DE)
(86) Internationale Anmeldenummer: PCT/EP2022/063889
(87) Internationale Veröffentlichungsnummer: WO 2022/268423

(56) Entgegenhaltungen:
- WO-A1-2022/194470
- WO-A1-2022/207208
- DE-A1- 102014 111 645
- DE-A1- 102018 215 580

## Beschreibung

Die Erfindung betrifft einen elektrischen Energiespeicher für ein Kraftfahrzeug aufweisend mehrere energiespeicherzugehörige Komponenten und ein Speichergehäuse, an und/oder in welchem die energiespeicherzugehörigen Komponenten angeordnet sind. Außerdem weist der elektrische Energiespeicher zumindest ein Verteilnetz zur Verteilung von Energie und/oder Informationen auf, welches in dem Speichergehäuse angeordnet ist und welches zumindest eine energiespeicherzugehörige Leitung aufweist, die zur Übertragung von Energie und/oder Informationen mit zumindest einer der energiespeicherzugehörigen Komponenten gekoppelt ist. Die Erfindung betrifft außerdem ein Kraftfahrzeug.

Vorliegend richtet sich das Interesse auf elektrische Energiespeicher, welche beispielsweise als Traktionsbatterien für elektrifizierte Kraftfahrzeuge, also Elektro- oder Hybridfahrzeuge, eingesetzt werden können. Solche elektrischen Energiespeicher weisen üblicherweise mehrere energiespeicherzugehörige Komponenten, beispielsweise Energiespeicherzellen, Steuereinrichtungen, Sensoreinrichtungen, usw. auf. Diese energiespeicherzugehörigen Komponenten sind üblicherweise, wie beispielsweise in der DE 10 2014 111 645 A1 gezeigt, in oder an einem Speichergehäuse des elektrischen Energiespeichers angeordnet. Der elektrische Energiespeicher kann beispielsweise im Bereich eines Fahrzeugbodens des Kraftfahrzeugs angeordnet sein und durch Verstärkungen an dem Kraftfahrzeug oder dem Speichergehäuse für Seitencrashbelastungen ertüchtigt sein. Die Gestaltungsfreiheit dieser Maßnahmen wird durch zwischen Vorder- und Hinterwagen verlaufende Leitungen eingeschränkt. Aufgrund der zentralen Anordnung des elektrischen Energiespeichers werden diese Leitungen im Allgemeinen zwischen dem elektrischen Energiespeicher und einer Seitenstruktur des Kraftfahrzeuges angeordnet. Insbesondere Leitungen, welche höhere Spannungen oder entzündliche Flüssigkeiten führen oder auch nach einem Fahrzeugcrash weiter funktionsfähig sein sollen, sind gegen die Crashbelastungen gesondert zu schützen. In der Folge ist durch diese Leitungen die Breite des Energiespeichers begrenzt und die Seitenstruktur des Fahrzeuges bzw. die Leitungen sind mit zusätzlichem Aufwand verstärkt. Dadurch werden sowohl die Kosten als auch das Gewicht des Kraftfahrzeugs erhöht.

Es ist Aufgabe der vorliegenden Erfindung, eine gewichts- und kostenreduzierende Lösung zum Schützen von Leitungen des Kraftfahrzeugs vor Crashbelastungen bereitzustellen.

Diese Aufgabe wird erfindungsgemäß durch einen elektrischen Energiespeicher sowie ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung sowie der Figuren.

Ein erfindungsgemäßer elektrischer Energiespeicher für ein Kraftfahrzeug weist mehrere energiespeicherzugehörige Komponenten sowie ein Speichergehäuse, an und/oder in welchem die energiespeicherzugehörigen Komponenten angeordnet sind, auf. Außerdem weist der elektrische Energiespeicher zumindest ein Verteilnetz zur Verteilung von Energie und/oder Informationen auf, welches in dem Speichergehäuse angeordnet ist und welches zumindest eine energiespeicherzugehörige Leitung zur Übertragung von Energie und/oder Informationen aufweist, die mit zumindest einer der energiespeicherzugehörigen Komponenten gekoppelt ist. Darüber hinaus weist das zumindest eine Verteilnetz zumindest eine energiespeicherfremde Leitung zur Übertragung von Energie und/oder Informationen zwischen energiespeicherfremden Komponenten des Kraftfahrzeugs außerhalb des Speichergehäuses auf.

Ein erfindungsgemäßes Kraftfahrzeug umfasst einen erfindungsgemäßen elektrischen Energiespeicher sowie zumindest zwei energiespeicherfremde Komponenten, welche mittels der zumindest einen energiespeicherfremden, in das zumindest eine Verteilnetz integrierten Leitung gekoppelt sind. Die energiespeicherfremden Komponenten können beispielsweise ein Antrieb des Kraftfahrzeugs, ein Kältemittelverdichter, eine Bremsanlage oder dergleichen sein. Der elektrische Energiespeicher ist insbesondere im Bereich eines Unterbodens des Kraftfahrzeugs, beispielsweise mittig zwischen einem Vorderwagen und einem Hinterwagen, angeordnet.

Der elektrische Energiespeicher weist energiespeicherzugehörige Komponenten bzw. Energiespeicherkomponenten auf. Solche Energiespeicherkomponenten können Energiespeicherzellen, beispielsweise Rundzellen, prismatische Zellen oder Pouchzellen, sein, welche zu zumindest einem Zellverbund paketiert und verschaltet sind. Ferner können solche Energiespeicherkomponenten zellspezifische Einrichtungen sein, welche Sensoren und Aktoren zum Überwachen der Energiespeicherzellen aufweisen können. Auch können die Energiespeicherkomponenten Steuergeräte sein, welche beispielsweise mit den zellspezifischen Einrichtungen gekoppelt sind.

Die Energiespeicherkomponenten sind in und/oder an dem Speichergehäuse angeordnet. Das Speichergehäuse kann beispielsweise zwei Gehäuseteile in Form von einem Gehäuseunterteil und einem Gehäuseoberteil aufweisen, welche unter Ausbildung eines Gehäuseinnenraums zum Aufnehmen der Energiespeicherkomponenten mechanisch verbunden sind. Außerdem ist in dem Speichergehäuse zumindest ein Verteilnetz angeordnet, welches mehrere energiespeicherzugehörige Leitungen aufweisen kann. Beispielsweise können die energiespeicherzugehörigen Leitungen die Energiespeicherkomponenten miteinander koppeln und/oder zumindest eine Energiespeicherkomponente mit einer energiespeicherfremden Komponente außerhalb des Speichergehäuses koppeln.

Das Speichergehäuse kann Crashstrukturen aufweisen und/oder von fahrzeugseitigen Crashstrukturen umgeben sein, welche dazu ausgelegt sind, eine auf den elektrischen Energiespeicher wirkende, unfallbedingte Kraft aufzunehmen und von den Energiespeicherkomponenten fernzuhalten. Um diese Crashstrukturen in vorteilhafter Weise für energiespeicherfremde Leitungen mitnutzen zu können, sind diese energiespeicherfremden Leitungen in das zumindest eine Verteilnetz integriert und damit ebenfalls in dem Speichergehäuse angeordnet. Die energiespeicherfremden Leitungen werden also nicht an dem elektrischen Energiespeicher vorbei-, sondern durch das Speichergehäuse hindurchgeführt. Die energiespeicherfremden Leitungen dienen beispielsweise zum Koppeln von energiespeicherfremden Komponenten des Kraftfahrzeugs, zwischen welchen der elektrische Energiespeicher angeordnet ist. Das Speichergehäuse kann beispielsweise Durchführungen oder Anschlüsse aufweisen, mit welchen ein speichergehäuseinterner Abschnitt der zumindest einen energiespeicherfremden Leitung verbunden ist und mit welchen ein speichergehäuseexterner Abschnitt der zumindest einen energiespeicherfremden Leitung verbindbar ist. Hierdurch können die energiespeicherfremden Leitungen eine im Vorderwagen vor dem elektrischen Energiespeicher angeordnete, energiespeicherfremde Komponente mit einer im Hinterwagen hinter dem elektrischen Energiespeicher angeordneten, energiespeicherfremden Komponente verbinden.

Insbesondere ist zumindest eines der Gehäuseteile mehrwandig ausgebildet, wobei das zumindest eine Verteilnetz in das zumindest eine mehrwandige Gehäuseteil integriert ist.

Beispielsweise kann das mehrwandige Gehäuseteil doppelwandig oder dreischalig ausgebildet sein, sodass zumindest ein innerhalb des Gehäuseteils verlaufender Zwischenraum gebildet ist. In diesen zumindest einen Zwischenraum kann das zumindest eine Verteilnetz integriert sein.

In einer Variante der Erfindung ist das zumindest eine Verteilnetz als ein Kommunikationsnetz zum Übertragen von Informationen in Form von Überwachungssignalen und/oder Steuersignalen ausgebildet. Die energiespeicherzugehörigen Leitungen können dazu beispielsweise die zellspezifischen Einrichtungen der Energiespeicherzellen zur Überwachung der Energiespeicherzellen untereinander und/oder mit einem Steuergerät des Energiespeichers und/oder mit einem energiespeicherexternen Steuergerät verbinden. Die energiespeicherfremden Leitungen können in dieses speicherinterne Kommunikationsnetz integriert sein und beispielsweise Steuersignale und/oder Informationssignale zwischen dem Vorderwagen und dem Hinterwagen übertragen.

Dabei ist das Kommunikationsnetz als ein Wellenleiter in Form von einem einstückigen Formteil ausgebildet, welcher dazu ausgelegt ist, als die Überwachungssignale und/oder Steuersignale akustische und/oder optische Signale zu übertragen.

Das einteilige Formteil kann mehrere Formteilabschnitte, beispielsweise zumindest einen Sammelkanal und daran angeschlossene Anschlusskanäle, aufweisen, wobei der Sammelkanal mit einem Steuergerät des Energiespeichers und die Anschlusskanäle mit den zellspezifischen Einrichtungen der Energiespeicherzellen gekoppelt sein können. Das Formteil ist dabei ein Fertigteil, welches mit nur einem Montageschritt in das Speichergehäuse integriert werden kann. Das Formteil besteht also nicht aus Einzelteilen, welche miteinander verbunden bzw. verkabelt werden müssen, sondern stellt bereits ein einstückiges Kommunikationsnetz bzw. Übertragungsnetzwerk, beispielsweise in Form von einer Bustopologie, zur Signalübertragung bereit. Beim Anordnen des Formteils werden die Anschlusskanäle beispielsweise an den zellspezifischen Einrichtungen der Energiespeicherkomponenten angeordnet und der zumindest eine Sammelkanal wird an dem zumindest einen Steuergerät angeordnet.

Zum Kommunizieren mit dem Steuergerät koppelt eine Einrichtung einer Energiespeicherzelle ein optisches und/oder akustisches Signal in den zugehörigen Anschlusskanal ein, welches über den Anschlusskanal und den Sammelkanal übertragen wird und am Sammelkanal wieder ausgekoppelt wird. Zum Kommunizieren mit einer Energiespeicherzelle koppelt das Steuergerät ein optisches und/oder akustisches Signal in den Sammelkanal ein, welches über den Sammelkanal und den Anschlusskanal übertragen wird und am Anschlusskanal der jeweiligen Energiespeicherzelle wieder ausgekoppelt wird. Der Sammelkanal und die Anschlusskanäle bilden also die energiespeicherzugehörigen Leitungen zur Informationsübertragung aus. Jeder Energiespeicherkomponente kann dabei beispielsweise eine spezifische Wellenlänge bzw. ein entsprechendes Signalband der elektromagnetischen Welle und/oder Schallwelle zugeordnet sein. Zur Signalgenerierung und zum Signalempfang können die Energiespeicherkomponenten Sende- und Empfangselemente aufweisen. Im Falle von optischen Signalen sind die Sendeelemente beispielsweise LEDs und die Empfangselemente sind Fotodetektoren. Im Falle von akustischen Signalen sind die Sendeelemente beispielsweise Lautsprecher und die Empfangselemente sind Mikrofone. Das Formteil weist zusätzlich zumindest einen weiteren Formteilabschnitt auf, welcher die zumindest eine energiespeicherfremde Leitung ausbildet. Der zumindest eine weitere Formteilabschnitt kann beispielsweise parallel zu dem Sammelkanal ausgebildet sein.

Das Formteil ist als ein Vollkörper ausgebildet, welcher erste Oberflächenstrukturierungen zur Signaleinkopplung und Signalauskopplung für die energiespeicherzugehörigen Komponenten und zweite Oberflächenstrukturierungen zur Signaleinkopplung und Signalauskopplung für die energiespeicherfremden Komponenten aufweist. Die Oberflächenstrukturierungen bilden also Signaleingänge und Signalausgänge zu den zugehörigen Formteilabschnitten, welche wiederum die energiespeicherfremden und energiespeicherzugehörigen Leitungen ausbilden. Die zweiten Oberflächenstrukturierungen können beispielsweise mit den Anschlüssen des Speichergehäuses gekoppelt sein, welche wiederum mit den energiespeicherexternen Abschnitten der energiespeicherfremden Leitung koppelbar sind.

Der Vollkörper ist insbesondere aus einem Kunststoff, beispielsweise Polyacryl, gefertigt. Vorzugsweise ist das Formteil als ein Spritzgussteil ausgebildet. Beispielsweise können Oberflächen des Vollkörpers zum Ausbilden der Oberflächenstrukturierung bereichsweise angeschliffen oder angeätzt werden, um die Bereiche zur Signaleinkopplung und Signalauskopplung auszubilden. Ein solches Formteil kann auf besonders einfache und kostengünstige Weise gefertigt werden. Auch kann das Formteil zum Reduzieren einer Dämpfung des akustischen und/oder optischen Signals zumindest bereichsweise eine Beschichtung aus einem reflektierenden Material aufweisen. Eine solche Beschichtung wird abseits der zur Signaleinkopplung und Signalauskopplung vorgesehenen Bereiche angebracht. Die Beschichtung kann beispielsweise eine Metallisierung sein.

In einer anderen Variante der Erfindung ist das zumindest eine Verteilnetz als ein Stromnetz zur Energieübertragung ausgebildet, wobei das Stromnetz in und/oder an einem Zellmodulrahmen von energiespeicherzugehörigen Komponenten in Form von Energiespeicherzellen angeordnet ist. Das Stromnetz kann beispielsweise in ein Zellkontaktiersystem zum Verschalten der Energiespeicherzellen integriert sein, welches wiederum in den Zellmodulrahmen integriert ist. Das Stromnetz bzw. Energieübertragungsnetz kann beispielsweise energiespeicherzugehörige Stromleitungen aufweisen, welche Anschlüsse des Zellverbunds mit einem Leistungsanschluss des elektrischen Energiespeichers verbinden, welcher beispielsweise mit einer Leitungselektronik eines Antriebs des Kraftfahrzeugs verbindbar ist. Außerdem weist das Stromnetz zumindest eine energiespeicherfremde Stromleitung auf, über welche Energie durch das Speichergehäuse hindurch zwischen den energiespeicherfremden Komponenten des Kraftfahrzeugs übertragbar ist.

Die mit Bezug auf den erfindungsgemäßen elektrischen Energiespeicher vorgestellten Ausführungsformen und deren Vorteile gelten entsprechend für das erfindungsgemäße Kraftfahrzeug.

Weitere Merkmale der Erfindung ergeben sich aus den Ansprüchen, der Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die Zeichnungen näher erläutert. Es zeigen:
- Fig. 1: eine schematische Seitenschnittdarstellung eines elektrischen Energiespeichers;
- Fig. 2: eine schematische Längsschnittdarstellung eines Gehäuseteils des elektrischen Energiespeichers;
- Fig. 3: eine schematische Längsschnittdarstellung eines Rahmens des elektrischen Energiespeichers; und
- Fig. 4: eine schematische Seitenschnittdarstellung eines Ausschnitts des elektrischen Energiespeichers.

In den Figuren sind gleiche oder funktionsgleiche Elemente mit den gleichen Bezugszeichen versehen.

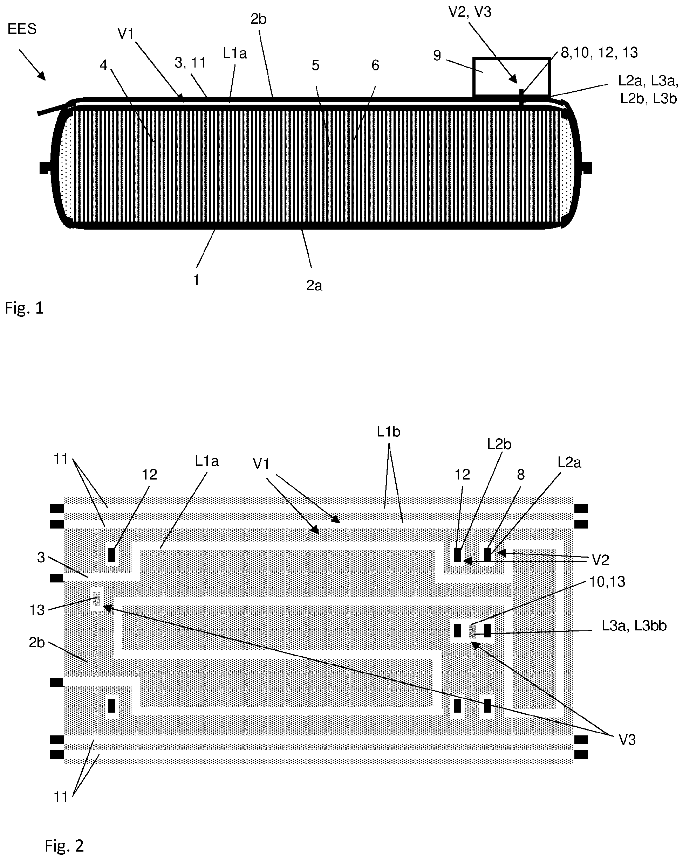

Fig. 1 zeigt einen elektrischen Energiespeicher EES, welcher ein Speichergehäuse 1 mit einem ersten Gehäuseteil 2a in Form von einem Gehäuseunterteil und einem zweiten Gehäuseteil 2b in Form von einem Gehäuseoberteil aufweist. Der elektrische Energiespeicher EES kann beispielsweise als Traktionsbatterie für ein elektrisch antreibbares Kraftfahrzeug verwendet werden und als ein Hochvoltenergiespeicher ausgebildet sein. Das Gehäuseoberteil 2b kann mehrschalig ausgebildet sein und zumindest einen kanalartigen ersten Zwischenraum 3 für ein strömendes Temperierfluid, beispielsweise ein Kühlfluid, enthalten. Der erste Zwischenraum 3 kann über Anschlüsse mit einem äußeren Kühlkreislauf verbunden werden. In dem Speichergehäuse 1 zwischen dem Gehäuseunterteil 2a und dem Gehäuseoberteil 2b sind energiespeicherzugehörige Komponenten angeordnet. Solche energiespeicherzugehörigen Komponenten können zu zumindest einem Zellverbund 4 paketierte, in einem Rahmen 5 angeordnete Energiespeicherzellen 6 sein. Die Energiespeicherzellen 6 sind durch ein Zellkontaktiersystem 7 verschaltet bzw. elektrisch verbunden. Über das in dem ersten Zwischenraum 3 strömende Temperierfluid können die energiespeicherzugehörigen Komponenten temperiert, beispielsweise gekühlt, werden. Der erste Zwischenraum 3 ist somit eine fluidübertragende, energiespeicherzugehörige erste Leitung L1a eines hier nicht beanspruchten ersten Verteilnetzes V1 in Form von einem Fluidverteilsystem.

Der Zellverbund 4 kann durch Leistungsanschlüsse 8 mit Steuereinrichtungen 9, welche hier als energiespeicherzugehörige, außerhalb an dem Speichergehäuse 1 angeordnete Komponenten ausgebildet sind, verbunden sein. Die Leistungsanschlüsse 8 können beispielsweise aus isolierten Flachleitern gebildet sein, welche Kontakte des Zellverbunds 4 mit Kontakten außerhalb des Zellverbunds 4 verbinden. Dabei können die Flachleiter ein- oder mehrlagig ausgeführt sein. Die Leitungsanschlüsse 8 sind somit energieübertragende, energiespeicherzugehörige zweite Leitungen L2a eines zweiten Verteilnetzes V2 in Form von einem Stromnetz.

Der Zellverbund 4 kann weiterhin durch Senseanschlüsse 10 mit den Steuereinrichtungen 9 verbunden sein. Die Senseanschlüsse 10 sind beispielsweise elektrische Anschlüsse oder Wellenleiter, welche Sensoren des Zellverbunds 4 zur Überwachung der Energiespeicherzellen 6 mit Anschlüssen außerhalb des Zellverbunds 4 verbinden. Die Senseanschlüsse 10 sind somit informationsübertragende, energiespeicherzugehörige dritte Leitungen L3a eines dritten Verteilnetzes V3 in Form von einem Kommunikationsnetz. Die Leistungsanschlüsse 8 und die Senseanschlüsse 10 sind insbesondere derart ausgeführt, dass eine feste Verbindung des Rahmens 5 mit dem zweiten Gehäuseteil 2b sowie ein großer Leitungsquerschnitt gewährleistet sind.

Das zweite Gehäuseteil 2b, welches in einer Längsschnittdarstellung in Fig. 2 gezeigt ist, weist hier zusätzlich zu dem ersten Zwischenraum 3 für die Temperierung des elektrischen Energiespeichers EES weitere kanalartige Zwischenräume 11 auf, die jeweils Anschlüsse für Fluidleitungen am vorderen und hinteren Ende des elektrischen Energiespeichers EES aufweisen. Die Zwischenräume 3, 11 können dabei in der gleichen Ebene oder in unterschiedlichen Ebenen, z.B. durch ein dreischaliges Gehäuseteil 2b mit zwei Ebenen für Hohlräume, ausgebildet sein. Die weiteren Zwischenräume 11 bilden fluidübertragende, energiespeicherfremde erste Leitungen L1b zur Übertragung von Stoffen, insbesondere Fluiden, für hier nicht gezeigte energiespeicherfremde Komponenten, wobei die energiespeicherfremden Leitungen L1b in das, in den elektrischen Energiespeichers EES integrierte erste Verteilnetz V1 integriert sind. Solche Leitungen L1b können beispielsweise Kühlmittelleitungen für einen Antrieb, Kältemittelleitungen für einen Kältemittelkreislauf, Bremsleitungen, Ölleitungen oder dergleichen sein, welche mittels des Verteilnetzes V1 durch das Speichergehäuse 1 zwischen einem vorderen und einem hinteren Ende des elektrischen Energiespeichers EES hindurchgeführt sind.

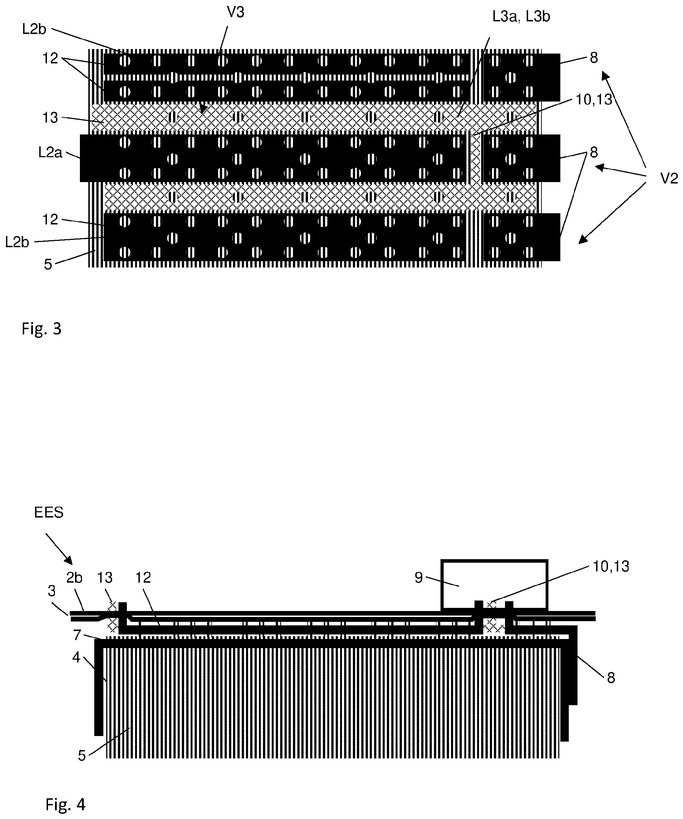

Analog zu den Leistungsanschlüsse 8 sind hier, wie in einer Draufsicht auf den Rahmen 5 in Fig. 3 sowie in einer Querschnittdarstellung eines Ausschnitts des elektrischen Energiespeichers EES in Fig. 4 gezeigt, weitere Leistungsverbindungen 12 zwischen dem Rahmen 5 und dem zweitem Gehäuseteil 2b angeordnet, welche nur Anschlüsse außerhalb des Zellverbunds 4 beinhalten. Diese Leistungsanschlüsse 12 dienen zur Durchleitung von Energie für die energiespeicherfremden Komponenten, beispielsweise den Antrieb, einen Kältemittelverdichter, eine Ladeeinrichtung, ein Fahrzeugbordnetz, oder dergleichen zwischen vorderem und hinterem Ende des elektrischen Energiespeichers EES. Die Leistungsverbindungen 12 bilden somit energieübertragende, energiespeicherfremde zweite Leitungen L2b, welche in das zweite Verteilnetz V2 integriert sind und somit durch das Speichergehäuse 1 hindurch geführt sind.

Analog zu den Senseanschlüsse 10 sind hier weitere Kommunikationsverbindungen 13 zwischen dem Rahmen 5 und dem zweiten Gehäuseteil 2b angeordnet, welche nur Anschlüsse außerhalb des Zellverbunds 4 beinhalten und zur Durchleitung von Kommunikationssignalen für die energiespeicherfremden Komponenten zwischen dem vorderen und dem hinteren Ende des elektrischen Energiespeichers EES dienen. Die Kommunikationsverbindungen 13 bilden somit informationsübertragende, energiespeicherfremde dritte Leitungen L3b, welche in das dritte Verteilnetz V3 integriert sind und somit durch das Speichergehäuse 1 hindurch geführt sind. Beispielsweise können in dem zweiten Gehäuseteil 2b, wie in Fig. 4 gezeigt, Durchgangsöffnungen oder Anschlüsse vorgesehen sein, durch welche die energiespeicherfremden Leitungen L2b, L3b aus dem Speichergehäuse 1 herausgeführt sind.

Ebenfalls können die Senseanschlüsse 10 und weitere Kommunikationsverbindungen 13 funktional integrierte Elemente sein, z.B. in Form von einem protokollierten Signalbus, auf welchen die zusätzlichen Signale an den Außenanschlüssen eingekoppelt werden. Besonders vorteilhaft ist dieser Signalbus als Wellenleiter ausgebildet, welcher die Anschlüsse innerhalb des Zellverbunds 4 sowie die Anschlüsse an dem vorderen und dem hinteren Ende des elektrischen Energiespeichers EES beinhaltet. Die Leitungen L2a, L2b, L3a, L3b können auch in das Zellkontaktiersystem 7 integriert sein.

## Patentansprüche

1. Elektrischer Energiespeicher (EES) für ein Kraftfahrzeug aufweisend:
- mehrere energiespeicherzugehörige Komponenten (6, 9),
- ein Speichergehäuse (1), an und/oder in welchem die energiespeicherzugehörigen Komponenten (6, 9) angeordnet sind, und
- zumindest ein Verteilnetz (V2, V3) zur Verteilung von Energie und/oder Informationen, welches in dem Speichergehäuse (1) angeordnet ist und welches zumindest eine energiespeicherzugehörige Leitung (L2a, L3a) aufweist, die zur Übertragung von Energie und/oder Informationen mit zumindest einer der energiespeicherzugehörigen Komponenten (6, 9) gekoppelt ist, wobei das zumindest eine Verteilnetz (V2, V3) zumindest eine energiespeicherfremde Leitung (L2b, L3b) zur Übertragung von Energie und/oder Informationen zwischen energiespeicherfremden Komponenten des Kraftfahrzeugs außerhalb des Speichergehäuses (1) aufweist,
**dadurch gekennzeichnet, dass**
das zumindest eine Verteilnetz (V2, V3) als ein Stromnetz (V2) zur Energieübertragung ausgebildet ist, wobei das Stromnetz (V2) in und/oder an einem Zellmodulrahmen (5) von energiespeicherzugehörigen Komponenten in Form von Energiespeicherzellen (6) angeordnet ist.

2. Elektrischer Energiespeicher (EES) für ein Kraftfahrzeug aufweisend:
- mehrere energiespeicherzugehörige Komponenten (6, 9),
- ein Speichergehäuse (1), an und/oder in welchem die energiespeicherzugehörigen Komponenten (6, 9) angeordnet sind, und
- zumindest ein Verteilnetz (V2, V3) zur Verteilung von Energie und/oder Informationen, welches in dem Speichergehäuse (1) angeordnet ist und welches zumindest eine energiespeicherzugehörige Leitung (L2a, L3a) aufweist, die zur Übertragung von Energie und/oder Informationen mit zumindest einer der energiespeicherzugehörigen Komponenten (6, 9) gekoppelt ist, wobei das zumindest eine Verteilnetz (V2, V3) zumindest eine energiespeicherfremde Leitung (L2b, L3b) zur Übertragung von Energie und/oder Informationen zwischen energiespeicherfremden Komponenten des Kraftfahrzeugs außerhalb des Speichergehäuses (1) aufweist, und wobei das zumindest eine Verteilnetz (V2, V3) als ein Kommunikationsnetz (V3) zum Übertragen von Informationen in Form von Überwachungssignalen und/oder Steuersignalen ausgebildet ist,
**dadurch gekennzeichnet, dass**
das Kommunikationsnetz (V3) als ein Wellenleiter ausgebildet ist, welcher dazu ausgelegt ist, als die Überwachungssignale und/oder Steuersignale akustische und/oder optische Signale zu übertragen und der Wellenleiter als ein einstückiges Formteil ausgebildet ist, wobei das Formteil als ein Vollkörper ausgebildet ist, welcher erste Oberflächenstrukturierungen zur Signaleinkopplung und Signalauskopplung für die energiespeicherzugehörigen Komponenten und zweite Oberflächenstrukturierungen zur Signaleinkopplung und Signalauskopplung für die energiespeicherfremden Komponenten aufweist.

3. Elektrischer Energiespeicher (EES) nach Anspruch 1 oder 2,
**dadurch gekennzeichnet, dass**
das Speichergehäuse (1) zumindest zwei Gehäuseteile (2a, 2b) aufweist, welche einen Gehäuseinnenraum zum Aufnehmen der energiespeicherzugehörigen Komponenten (6, 9) abschließen, wobei zumindest eines der Gehäuseteile (2b) mehrwandig ausgebildet ist und das zumindest eine Verteilnetz (V2, V3) in das zumindest eine mehrwandige Gehäuseteil (2b) integriert ist.

4. Kraftfahrzeug mit zumindest einem elektrischen Energiespeicher (EES) nach einem der vorhergehenden Ansprüche und zumindest zwei energiespeicherfremden Komponenten, welche mittels der zumindest einen energiespeicherfremden, in das zumindest eine Verteilnetz (V2, V3) integrierten Leitung (L2b, L3b) gekoppelt sind.

## Claims

1. Electrical energy storage unit (EES) for a motor vehicle, having:
- a plurality of components (6, 9) belonging to the energy storage unit,
- a storage unit housing (1), on and/or in which the components (6, 9) belonging to the energy storage unit are arranged, and
- at least one distribution network (V2, V3), for distributing energy and/or information, which is arranged in the storage unit housing (1) and which has at least one line (L2a, L3a), which belongs to the energy storage unit and is coupled to at least one of the components (6, 9) belonging to the energy storage unit so as to transmit energy and/or information, wherein
the at least one distribution network (V2, V3) has at least one line (L2b, L3b), separate to the energy storage unit, for transmitting energy and/or information between components, which are separate to the energy storage unit, of the motor vehicle outside of the storage unit housing (1),
**characterized in that**
the at least one distribution network (V2, V3) is in the form of a power network (V2) for energy transmission, wherein the power network (V2) is arranged in and/or on a cell module frame (5) of components, which belong to the energy storage unit and are in the form of energy storage cells (6).

2. Electrical energy storage unit (EES) for a motor vehicle, having:
- a plurality of components (6, 9) belonging to the energy storage unit,
- a storage unit housing (1), on and/or in which the components (6, 9) belonging to the energy storage unit are arranged, and
- at least one distribution network (V2, V3), for distributing energy and/or information, which is arranged in the storage unit housing (1) and which has at least one line (L2a, L3a), which belongs to the energy storage unit and is coupled to at least one of the components (6, 9) belonging to the energy storage unit so as to transmit energy and/or information, wherein the at least one distribution network (V2, V3) has at least one line (L2b, L3b), separate to the energy storage unit, for transmitting energy and/or information between components, which are separate to the energy storage unit, of the motor vehicle outside of the storage unit housing (1), and wherein the at least one distribution network (V2, V3) is in the form of a communication network (V3) for transmitting information in the form of monitoring signals and/or control signals,
**characterized in that**
the communication network (V3) is in the form of a waveguide that is configured to transmit acoustic and/or optical signals as the monitoring signals and/or control signals, and the waveguide is in the form of a single-piece moulded part, wherein the moulded part is in the form of a solid body that has first surface structures for signal in-coupling and signal out-coupling for the components belonging to the energy storage unit, and second surface structures for signal in-coupling and signal out-coupling for the components separate to the energy storage unit.

3. Electrical energy storage unit (EES) according to Claim 1 or 2,
**characterized in that**
the storage unit housing (1) has at least two housing parts (2a, 2b) that terminate a housing interior for accommodating the components (6, 9) belonging to the energy storage unit, wherein at least one of the housing parts (2b) is of multi-walled design and the at least one distribution network (V2, V3) is integrated into the at least one multi-walled housing part (2b).

4. Motor vehicle comprising at least one electrical energy storage unit (EES) according to one of the preceding claims and at least two components, which are separate to the energy storage unit and are coupled by means of the at least one line (L2b, L3b), which is separate to the energy storage unit and integrated into the at least one distribution network (V2, V3).

## Revendications

1. Accumulateur d'énergie électrique (EES) pour un véhicule automobile comprenant :
- plusieurs composants associés à l'accumulateur d'énergie (6, 9),
- un boîtier d'accumulateur (1), sur et/ou dans lequel sont disposés les composants associés à l'accumulateur d'énergie (6, 9), et
- au moins un réseau de distribution (V2, V3) pour distribuer de l'énergie et/ou des informations, disposé dans le boîtier d'accumulateur (1) et comportant au moins une conduite (L2a, L3a) associée à l'accumulateur d'énergie, couplée à au moins un des composants (6, 9) associés à l'accumulateur d'énergie pour transmettre de l'énergie et/ou des informations
l'au moins un réseau de distribution (V2, V3) comporte au moins une conduite non liée à l'accumulateur d'énergie (L2b, L3b) pour transmettre de l'énergie et/ou des informations entre des composants non associés à l'accumulateur d'énergie du véhicule automobile à l'extérieur du boîtier d'accumulateur (1),
**caractérisé en ce que**
l'au moins un réseau de distribution (V2, V3) est conçu comme un réseau électrique (V2) pour la transmission d'énergie, le réseau électrique (V2) étant disposé dans et/ou sur un cadre de module cellulaire (5) de composants associés à l'accumulateur d'énergie sous forme de cellules d'accumulateur d'énergie (6).

2. Accumulateur d'énergie électrique (EES) pour un véhicule automobile comprenant :
- plusieurs composants associés à l'accumulateur d'énergie (6, 9),
- un boîtier d'accumulateur (1), sur et/ou dans lequel sont disposés les composants associés à l'accumulateur d'énergie (6, 9), et
- au moins un réseau de distribution (V2, V3) pour la distribution d'énergie et/ou d'informations, qui est disposé dans le boîtier d'accumulateur (1) et qui présente au moins une conduite (L2a, L3a) associée à l'accumulateur d'énergie, qui est couplée à au moins un des composants (6, 9) associés à l'accumulateur d'énergie pour la transmission d'énergie et/ou d'informations, dans lequel l'au moins un réseau de distribution (V2, V3) présente au moins une conduite (L2b, L3b) non associée à l'accumulateur d'énergie pour la transmission d'énergie et/ou d'informations entre des composants du véhicule automobile non associés à l'accumulateur d'énergie et situés à l'extérieur du boîtier d'accumulateur (1), et dans lequel l'au moins un réseau de distribution (V2, V3) est conçu comme un réseau de communication (V3) pour la transmission d'informations sous la forme de signaux de surveillance et/ou de signaux de commande,
**caractérisé en ce que**
le réseau de communication (V3) est réalisé sous la forme d'un guide d'ondes qui est conçu pour transmettre des signaux acoustiques et/ou optiques en tant que signaux de surveillance et/ou signaux de commande et le guide d'ondes est réalisé sous la forme d'une pièce moulée d'un seul tenant, la pièce moulée étant réalisée sous la forme d'un corps plein qui présente des premières structurations de surface pour le couplage de signaux et le découplage de signaux pour les composants associés à l'accumulateur d'énergie et des deuxièmes structurations de surface pour le couplage de signaux et le découplage de signaux pour les composants non associés à l'accumulateur d'énergie.

3. Accumulateur d'énergie électrique (EES) selon la revendication 1 ou 2,
**caractérisé en ce que**
le boîtier d'accumulateur (1) présente au moins deux parties de boîtier (2a, 2b) qui ferment un espace intérieur de boîtier pour accueillir les composants (6, 9) associés à l'accumulateur d'énergie, au moins l'une des parties de boîtier (2b) étant réalisée à plusieurs parois et l'au moins un réseau de distribution (V2, V3) étant intégré dans la au moins une partie de boîtier (2b) à plusieurs parois.

4. Véhicule automobile comportant au moins un accumulateur d'énergie électrique (EES) selon l'une des revendications précédentes et au moins deux composants non associés à l'accumulateur d'énergie, qui sont couplés au moyen de ladite au moins une conduite (L2b, L3b) non associée à l'accumulateur d'énergie et intégrée dans ledit au moins un réseau de distribution (V2, V3).
